# EUROPEAN PATENT APPLICATION

(11) **EP 2 982 432 A1**
(43) Date of publication of application: **10.02.2016**
(21) Application number: 15179870.9
(22) Date of filing: 05.08.2015
(51) Int. Cl.: B01J 23/42, B01J 23/52, B01J 37/03, B01D 53/94, B01J 37/16, F01N 3/10

(54) **NOX STORAGE REDUCTION CATALYST AND PRODUCTION METHOD THEREOF**

(30) Priority: 08.08.2014 JP 2014162697
(71) Applicant: Toyota Jidosha Kabushiki Kaisha, Toyota-shi, Aichi-ken 471-8571 (JP)
(72) Inventor: SHIRAKAWA, Shogo, TOYOTA-SHI, AICHI-KEN, 471-8571 (JP); AKASHI, Kazutoshi, TOYOTA-SHI, AICHI-KEN, 471-8571 (JP)
(74) Representative: Hart-Davis, Jason

(57) **Abstract**

An NOx storage reduction catalyst comprises a catalyst support, and a catalyst metal and an NOx storage material supported thereon, wherein the catalyst metal is composed of a platinum-gold solid solution, and has a gold content of greater than 1 mol% but 20 mol% or less relative to the total molar number of platinum and gold contained in the catalyst metal. A method for producing an NOx storage reduction catalyst comprises adding sodium borohydride to a mixed solution containing platinum ions and gold ions, thereby reducing the platinum ions and the gold ions to produce a catalyst metal composed of a platinum-gold solid solution; purifying the catalyst metal; and supporting the catalyst metal and an NOx storage material on a catalyst support.

## Description

### TECHNICAL FIELD

The present invention relates to an NOx storage reduction catalyst and a production method thereof. More specifically, the present invention relates to an NOx storage reduction catalyst comprising a catalyst metal composed of a platinum-gold solid solution, and a production method thereof.

### BACKGROUND ART

As the catalyst for purifying NOx in an exhaust gas discharged from an internal combustion engine such as lean burn engine operated as a whole with a higher air-fuel ratio than the theoretical air-fuel ratio, an exhaust gas purification catalyst of an NOx storage reduction (NSR) type has been developed and put into practical use.

As the catalyst of this type, a catalyst obtained by forming a catalyst layer containing a catalyst metal such as platinum (Pt), palladium (Pd) and rhodium (Rh) on a honeycomb substrate such as cordierite, and supporting an NOx storage material containing an element such as alkali metal, alkaline earth metal and rare earth element on the catalyst layer is generally known.

Patent Document 1 describes a production method of an NOx storage reduction catalyst, comprising supporting, on an inorganic support, metal particles selected from the group consisting of Pt, Pd, Au, Ag, Rh and Ir, and stacking, on the metal particles, a metal selected from the group consisting of Pt, Pd, Au, Ag, Rh and Ir and different from the supported metal particles, wherein the stacking is performed by a reduction deposition method. Further, Patent Document 1 specifically discloses production of a catalyst such as (Pt-Au)Al₂O₃ in Examples. In addition, Patent Document 1 describes that according to the above production method, an NOx reduction catalyst excellent in the purification ratio, comprising first catalyst metal particles and a second metal stacked thereon, can be stably produced by a reduction deposition method.

### PRIOR ART DOCUMENTS

### PATENT DOCUMENTS

Patent Document 1: JP 2001-104804 A

### SUMMARY OF THE INVENTION

### PROBLEMS TO BE SOLVED BY THE INVENTION

In the purification method using an NOx storage reduction (NSR) catalyst, combustion is normally performed under a lean air-fuel ratio and during the combustion, for example, NO in the exhaust gas is oxidized to NO₂ by a catalyst metal such as Pt and is stored as a nitrate in the NOx storage material. When the NOx storage material nears saturation of the NOx storage capacity, the air-fuel ratio of the exhaust gas is temporarily changed to a rich side, as a result, NOx is released from the NOx storage material, and then the released NOx reacts with hydrocarbon (HC), etc., contained in the exhaust gas and is purified by reduction.

A catalyst metal such as Pt is generally known to develop an NO oxidation activity in the metal state. However, in a lean atmosphere with excess oxygen, Pt is likely to form an oxide, and therefore may not sufficiently adsorb and oxidize NO in an exhaust gas. In this case, there arises a problem that NOx in an exhaust gas cannot be adequately stored in an NOx storage material.

In the catalyst such as (Pt-Au)Al₂O₃ specifically disclosed in Patent Document 1, Au is stacked on Pt particles, i.e., Pt particles are covered with Au, and therefore adsorption and oxidation of NO by Pt may be inhibited by Au. For this reason, with the catalyst specifically disclosed in Patent Document 1, a sufficiently high NOx storage ability may not be necessarily achieved.

Accordingly, an object of the present invention is to provide a novel NOx storage reduction catalyst comprising platinum as a catalyst component, in which a higher NOx storage ability can be achieved compared with the conventional catalyst; and a production method thereof.

### MEANS FOR SOLVING THE PROBLEMS

The present invention for attaining this object is as follows.
(1) An NOx storage reduction catalyst comprising a catalyst support, and a catalyst metal and an NOx storage material supported thereon, wherein the catalyst metal is composed of a platinum-gold solid solution, and has a gold content of greater than 1 mol% but 20 mol% or less relative to the total molar number of platinum and gold contained in the catalyst metal.
(2) The NOx storage reduction catalyst as described in item (1), wherein the catalyst metal has a gold content of 5 mol% or more but 10 mol% or less relative to the total molar number of platinum and gold contained in the catalyst metal.
(3) The NOx storage reduction catalyst as described in item (1) or (2), wherein the catalyst metal has an average primary particle diameter of greater than 0 nm but 10 nm or less.
(4) The NOx storage reduction catalyst as described in item (3), wherein the catalyst metal has an average primary particle diameter of greater than 0 nm but 5 nm or less.
(5) The NOx storage reduction catalyst as described in any one of items (1) to (4), wherein when the catalyst metal is analyzed using a scanning transmission electron microscope equipped with an energy dispersive X-ray analyzer (STEM-EDX) under condition in which the spot size of an electron beam is 1 nm or less, both platinum and gold elements are detected at a majority of randomly selected 5 or more measurement points.
(6) The NOx storage reduction catalyst as described in item (5), wherein both platinum and gold elements are detected at 80% or more of randomly selected 5 or more measurement points.
(7) The NOx storage reduction catalyst as described in any one of items (1) to (6), wherein the catalyst support is selected from the group consisting of alumina, silica, silica-alumina, ceria, zirconia, ceria-zirconia, titania, and combinations thereof.
(8) The NOx storage reduction catalyst as described in item (7), wherein the catalyst support is ceria or ceria-zirconia.
(9) A method for producing an NOx storage reduction catalyst comprising a catalyst support, and a catalyst metal and an NOx storage material supported thereon wherein the catalyst metal is composed of a platinum-gold solid solution, the method comprising:
   adding sodium borohydride to a mixed solution containing platinum ions and gold ions in amounts such that the catalyst metal has a gold content of greater than 1 mol% but 20 mol% or less relative to the total molar number of platinum and gold contained in the catalyst metal, thereby reducing the platinum ions and the gold ions to produce a catalyst metal composed of a platinum-gold solid solution,
   purifying the catalyst metal obtained in the reducing step, and
   supporting the purified catalyst metal and an NOx storage material on a catalyst support.
(10) The method as described in item (9), wherein the reducing step is performed without heating operation.
(11) The method as described in item (9) or (10), wherein the purifying step comprises extracting the catalyst metal with acetone.
(12) The method as described in any one of items (9) to (11), wherein the mixed solution further contains a protecting agent.

### EFFECT OF THE INVENTION

According to the present invention, synthesizing a catalyst metal having a specific Au content in which Au and Pt are solid-solutioned at an atomic level, and supporting the catalyst metal on a catalyst support make it possible to obtain an NOx storage reduction catalyst having a remarkably improved NOx storage ability, compared with an NOx storage reduction catalyst prepared by suporting a catalyst metal composed of Pt alone on a catalyst support, or an NOx storage reduction catalyst prepared by the conventional reduction deposition method, which comprises a catalyst metal containing Au stacked on Pt particles. Further, according to the method of the present invention, unlike the conventional reduction deposition method and method using alcohol reduction, a catalyst metal composed of a platinum-gold solid solution can be produced by merely adding sodium borohydride as a reducing agent to a mixed solution containing platinum ions and gold ions in particular amounts, without the need for a heating operation.

### BRIEF DESCRIPTION OF THE DRAWINGS

Fig. 1 is a conceptual view for explaining the NOx storage mechanism in a lean atmosphere in the NOx storage reduction catalyst of the present invention.
Fig. 2 is a diagram schematically showing a process for producing the catalyst metal in the present invention.
Fig. 3 shows the analysis result of NOx storage absorption catalyst (Au content: 1 mol%) of Example 1 by STEM-EDX.
Fig. 4 shows the analysis result of NOx storage absorption catalyst (Au content: 5 mol%) of Example 2 by STEM-EDX.
Fig. 5 shows the analysis result of NOx storage absorption catalyst (Au content: 10 mol%) of Example 3 by STEM-EDX.
Fig. 6 shows the analysis result of NOx storage absorption catalyst (Au content: 0 mol%) of Example 6 by STEM-EDX.
Fig. 7 shows the NOx storage ability regarding the NOx storage reduction catalysts of Examples 1 to 6 and Comparative Examples 1 to 6.
Fig. 8 shows the X-ray diffraction pattern regarding the NOx storage reduction catalysts (Ag content: 5 mol%) of Example 2 and Comparative Example 2.
Fig. 9 is a graph showing the particle diameter of the Pt-Au catalyst metal calculated by a CO pulse adsorption method regarding the NOx storage reduction catalysts (Ag content: 5 mol%) of Example 2 and Comparative Example 2.
Fig. 10 is a conceptual view for explaining CO adsorption in the NOx storage reduction catalysts prepared according to (a) the method of the present invention and (b) the conventional reduction deposition method.

### MODE FOR CARRYING OUT THE INVENTION

### <NOx Storage Reduction Catalyst>

The NOx storage reduction catalyst of the present invention comprises a catalyst support, and a catalyst metal and an NOx storage material supported thereon, wherein the catalyst metal is composed of a platinum-gold solid solution, and has a gold content of greater than 1 mol% but 20 mol% or less relative to the total molar number of platinum and gold contained in the catalyst metal.

It is generally known that in an NOx storage reduction (NSR) catalyst comprising platinum (Pt) as a catalyst metal, during a lean air-fuel ratio operation, NO in an exhaust gas is oxidized to NO₂ by Pt, and the NO₂ resulting from oxidation is stored as a nitrate, i.e., Ba(NO₃)₂, etc., in an NOx storage material such as barium (Ba). However, in a lean atmosphere with excess oxygen, at least a part of Pt, and in particular, Pt existing on the surface of catalyst metal particles cannot be maintained in the metal state exhibiting a high oxidation activity for NO, and therefore forms an oxide. As a result, NO in the exhaust gas may not be sufficiently adsorbed and oxidized. In this case, there arises a problem that NOx in an exhaust gas cannot be adequately stored in the NOx storage material.

In order to solve such a problem, for example, a control is sometimes performed to reduce Pt from the oxidized state to the metal state exhibiting NO oxidation activity by injecting a relatively large amount of fuel and oxidize NO in an exhaust gas to NO₂ which is stored in an NOx storage material. However, such a control causes a significant deterioration of the fuel efficiency, and therefore is not preferred in general.

Therefore, the present inventors have focused attention on gold (Au) having a relatively weak affinity for oxygen, and studied a catalyst in which Au is combined with platinum (Pt). As a result, the present inventors have found that synthesizing a catalyst metal having a specific Au content in which Au and Pt are solid-solutioned at an atomic level, and supporting the catalyst metal on a catalyst support make it possible to obtain an NOx storage reduction catalyst having a remarkably improved NOx storage ability, compared with an NOx storage reduction catalyst prepared by supporting a catalyst metal composed of Pt alone on a catalyst support, or an NOx storage reduction catalyst prepared by the method disclosed in JP 2001-104804 A, specifically an NOx storage reduction catalyst prepared by stacking Au on Pt particles supported on a catalyst support.

Without being bound by any particular theory, it is believed that in the NOx storage reduction catalyst of the present invention, when the exhaust gas atmosphere is a lean atmosphere with excess oxygen, for example, NOx in an exhaust gas is stored in an NOx storage material by the mechanism described below.

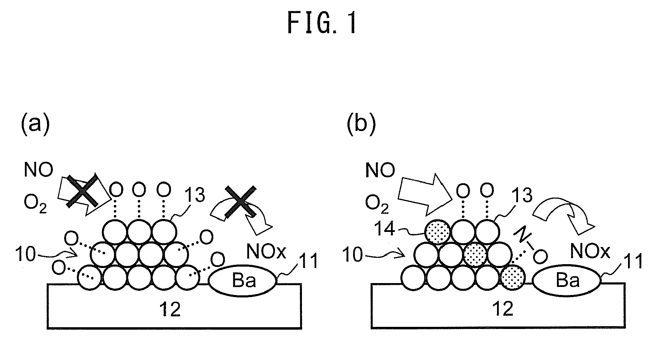

Fig. 1 is a conceptual view for explaining the NOx storage mechanism in a lean atmosphere in the NOx storage reduction catalyst of the present invention. More specifically, Fig. 1(a) shows the NOx storage behavior by the conventional NOx storage reduction catalyst comprising a catalyst metal composed of Pt alone, and Fig. 1(b) shows the NOx storage behavior by the NOx storage reduction catalyst of the present invention comprising a catalyst metal composed of a platinum-gold solid solution.

Referring to Fig. 1(a), the conventional NOx storage reduction catalyst comprising a catalyst metal composed of Pt alone has a structure where a catalyst metal 10 and an NOx storage material 11 such as Ba are supported on a catalyst support 12, and the catalyst metal 10 is composed of only Pt 13. As shown in Fig. 1(a), in the conventional NOx storage reduction catalyst, in a lean atmosphere with excess oxygen, Pt 13 in the catalyst metal 10, in particular, Pt 13 present on the surface of the catalyst metal 10 is readily coupled with oxygen (O) to form an oxide. In this case, it is not possible for the catalyst metal 10 to adequately adsorb and oxidize NOx in an exhaust gas. As a result, NOx in an exhaust gas cannot be sufficiently stored in the NOx storage material 11 present near the catalyst metal 10.

On the other hand, referring to Fig. 1(b), the NOx storage reduction catalyst of the present invention has a structure in which Pt 13 and Au 14 are solid solutioned in the catalyst metal 10. In this case, even in a lean atmosphere with excess oxygen, Au 14 having a relatively weak affinity for oxygen is believed to greatly suppress the oxidation of Pt 13 present in proximity thereto (the oxidation suppressing effect of Pt due to Au). Therefore, at least a part of Pt 13, in particular, a large part of Pt 13 can be maintained in the metal state exhibiting high NO oxidation activity. Thus, it is believed that according to the NOx storage reduction catalyst of the present invention, even in a lean atmosphere with excess oxygen, NO in an exhaust gas can be oxidized to NO₂ by Pt 13 and unfailingly stored in the NOx storage material 11. As a result, according to the NOx storage reduction catalyst of the present invention, it is possible to achieve a remarkably improved NOx purification performance, compared with the conventional NOx storage reduction catalyst comprising a catalyst metal composed of Pt alone.

### [Catalyst Metal]

The catalyst metal in the present invention is composed of a platinum-gold solid solution.

The expression "a platinum-gold solid solution" in the present invention encompasses a state where both elements of platinum and gold are mutually dissolved to form an overall homogeneous solid solution (complete solid solution state), and a state where both elements of platinum and gold are not completely solid-solutioned, but are at least partially solid-solutioned (incomplete solid solution state).

### [Judgment of Solid Solution Formation by STEM-EDX]

In the NOx storage reduction catalyst of the present invention, solid solution formation of platinum and gold can be judged, for example, based on the analysis results of the catalyst metal by a scanning transmission electron microscope equipped with an energy dispersive X-ray analyzer (STEM-EDX).

STEM-EDX is an analysis device combining a scanning transmission electron microscope (STEM) and an energy dispersive X-ray analyzer (EDX), and elemental analysis in a specific portion or region of an STEM image can be performed by using this analysis device.

Specifically, solid solution formation of platinum and gold can be determined by, for example, whether or not, when the catalyst metal is analyzed using STEM-EDX under condition in which the spot size of an electron beam is 1 nm or less, both platinum and gold elements are detected at a majority of randomly selected 5 or more measurement points. In other words, when the catalyst metal is analyzed using STEM-EDX under condition in which the spot size of an electron beam is 1 nm or less, if both platinum and gold elements are detected only at one or two measurement points for randomly selected 5 or more measurement points or only one element of platinum and gold is detected at all of the 5 measurement points, it can be judged that a solid solution of platinum and gold is not formed.

In particular, solid solution formation of platinum and gold can also be determined by the fact that when the catalyst metal is analyzed using STEM-EDX under condition in which the spot size of an electron beam is 1 nm or less, both platinum and gold elements are detected at 60% or more, preferably 70% or more, more preferably 80% or more or 90% or more and most preferably 95% or more or 100% of randomly selected 5 or more measurement points. Using such catalyst metal makes it possible to fully exert the effect of the present invention due to the combination of platinum and gold.

### [Gold Content]

According to the present invention, the catalyst metal has a gold content of greater than 1 mol% but 20 mol% or less relative to the total molar number of platinum and gold contained in the catalyst metal.

When the catalyst metal has a gold content of 1 mol% or less, the above-described effect due to addition of gold, for example, the oxidation suppressing effect of platinum due to gold may not be adequately obtained. On the other hand, when the catalyst metal has a gold content of greater than 20 mol%, platinum and gold may not form a solid solution, or a part of gold may not form a solid solution with platinum, and therefore may deposit on the platinum surface. In such a case, platinum and gold may be prevented from existing in proximity to each other at the nano-level, leading to a failure in sufficiently obtaining the oxidation suppressing effect of platinum due to gold, or platinum active sites may be covered with gold deposited on the platinum to significantly reduce the NO oxidation activity of the platinum.

According to the present invention, the catalyst metal has a gold content of greater than 1 mol%, in particular, 2 mol% or more, 3 mol% or more, 4 mol% or more, or 5 mol% or more, but 20 mol% or less, in particular, 17 mol% or less, 15 mol% or less, 12 mol% or less, or 10 mol% or less relative to the total molar number of platinum and gold contained in the catalyst metal. For example, the catalyst metal preferably has a gold content of greater than 1 mol% but 20 mol% or less, 3 mol% or more but 17 mol% or less, 4 mol% or more but 15 mol% or less, or 5 mol% or more but 10 mol% or less relative to the total molar number of platinum and gold contained in the catalyst metal. By controlling the gold content within these ranges, it is possible to unfailingly form a solid solution of platinum and gold and ensure a sufficient number of platinum active sites on the surface of the catalyst metal. As a result, the effect of the present invention due to a combination of platinum and gold, for example, the oxidation suppressing effect of platinum due to gold can be sufficiently brought out.

Unless otherwise indicated, the term "gold content" in the present invention refers to the ratio of the molar number of gold to the total molar number of platinum and gold contained in platinum and gold ion sources which are introduced at the time of synthesizing the catalyst metal composed of a platinum-gold solid solution.

### [Average Primary Particle Diameter of Catalyst Metal]

According to the present invention, the catalyst metal preferably has an average primary particle diameter of greater than 0 nm but 20 nm or less.

When the catalyst metal has an average primary particle diameter of greater than 20 nm, platinum and gold may not form a nano-level uniform solid solution. As a result, the effect of the combination of platinum and gold may not be sufficiently obtained. In addition, when the catalyst metal has such a large average primary particle diameter, the surface area of the catalyst metal becomes small, resulting in a decrease in the number of platinum active sites, and therefore a sufficient NOx storage ability, eventually a sufficient NOx purifying performance may not be achieved in the finally obtained NOx storage reduction catalyst. Accordingly, in the NOx storage reduction catalyst of the present invention, the catalyst metal preferably has an average primary particle diameter of greater than 0 nm but 20 nm or less, in particular, greater than 0 nm but 15 nm or less, greater than 0 nm but 10 nm or less, greater than 0 nm but 9 nm or less, greater than 0 nm but 8 nm or less, greater than 0 nm but 7 nm or less, greater than 0 nm but 6 nm or less, or greater than 0 nm but 5 nm or less.

Unless otherwise indicated, the term "average primary particle diameter" in the present invention refers to an arithmetic mean value of measured values when randomly selected 100 or more particles are measured for the diameter in a fixed direction (Feret diameter) by an electron microscope such as transmission electron microscope (TEM) and scanning electron microscope (SEM).

### [Crystallite Size of Catalyst Metal]

According to the present invention, the catalyst metal preferably has a crystallite size of greater than 0 nm but 10 nm or less.

When the catalyst metal has a crystallite size of greater than 10 nm, the effect of the combination of platinum and gold may not be sufficiently obtained. In addition, when the catalyst metal has such a large crystallite size, the surface area of the catalyst metal becomes small, resulting in a decrease in the number of platinum active sites, and therefore a sufficient NOx purifying performance may not be achieved in the finally obtained NOx storage reduction catalyst. Accordingly, in the NOx storage reduction catalyst of the present invention, the catalyst metal preferably has a crystallite size of greater than 0 nm but 10 nm or less, in particular, greater than 0 nm but 9 nm or less, greater than 0 nm but 8 nm or less, greater than 0 nm but 7 nm or less, greater than 0 nm but 6 nm or less, greater than 0 nm but 5 nm or less, greater than 0 nm but 4.5 nm or less, or greater than 0 nm but 4 nm or less. Using a catalyst metal having such a crystallite size as a catalyst component makes it possible to fully exert the effect of the combination of platinum and gold. As a result, it is possible to obtain an NOx storage reduction catalyst having a remarkably improved NOx storage ability, eventually a remarkably improved NOx purifying performance.

Unless otherwise indicated, the term "crystallite size" in the present invention refers to a crystallite size calculated using Scherrer equation from the half width at a diffraction peak obtained by powder X-ray diffraction.

### [NOx Storage Material]

According to the present invention, the NOx storage material may include, but is not particularly limited to, any material generally known as an NOx storage material in the technical field of an exhaust gas purification catalyst. The NOx storage material may include, for example, an alkali metal such as lithium (Li), sodium (Na), potassium (K), rubidium (Rb) and cesium (Cs), an alkaline earth metal such as beryllium (Be), magnesium (Mg), calcium (Ca), strontium (Sr) and barium (Ba), a rare earth element such as scandium (Sc), yttrium (Y), lanthanum (La), cerium (Ce), praseodymium (Pr), neodymium (Nd), dysprosium (Dy) and ytterbium (Yb), and any combinations thereof.

### [Catalyst Support]

In the NOx storage reduction catalyst of the present invention, the above-described catalyst metal and NOx storage material are supported each in any appropriate amount on a catalyst support. Although this is not particularly limited, for example, the catalyst metal may be supported on the catalyst support such that the amount of platinum and/or gold contained in the catalyst metal is generally 0.01 wt% or more, 0.1 wt% or more, 0.5 wt% or more, 1 wt% or more, or 2 wt% or more, and/or 10 wt% or less, 8 wt% or less, 7 wt% or less, or 5 wt% or less, relative to the catalyst support. Likewise, the NOx storage material may be supported on the catalyst support such that the amount of the NOx storage material is generally 0.01 wt% or more but 20 wt% or less relative to the catalyst support.

According to the present invention, a catalyst support for supporting the above-described catalyst metal may include, but is not particularly limited to, any metal oxide generally known as a catalyst support in the technical field of an exhaust gas purification catalyst. Such a catalyst support may include, for example, alumina (Al₂O₃), silica (SiO₂), silica-alumina (SiO₂-Al₂O₃), ceria (CeO₂), zirconia (ZrO₂), ceria-zirconia (CeO₂-ZrO₂), titania (TiO₂), and combinations thereof, etc. In view of oxygen storage/release capacity (OSC), for example, the catalyst support preferably comprises ceria (CeO₂) or ceria-zirconia (CeO₂-ZrO₂), etc.

The catalyst support may further comprise an additional metal element. For example, the catalyst support may further comprise at least one metal element selected from the group consisting of an alkaline earth metal and a rare earth element. Using such an additional metal element makes it possible to remarkably improve, for example, the heat resistance of the catalyst support. Specific examples of the additional metal element may include, but are not particularly limited to, for example, barium (Ba), lanthanum (La), yttrium (Y), praseodymium (Pr), neodymium (Nd), and combinations thereof, etc.

The NOx storage reduction catalyst of the present invention may further comprise other catalyst components, in addition to the above-described catalyst metal. For example, the NOx storage reduction catalyst of the present invention may further comprise a noble metal other than platinum (Pt) and gold (Au), such as palladium (Pd) and rhodium (Rh). Further using these catalyst components makes it possible to remarkably improve not only the NOx storage ability and purifying performance, but also the oxidation activity for CO or HC.

### <Production Method of NOx Storage Reduction Catalyst>

The present invention also provides a production method of an NOx storage reduction catalyst, where an NOx storage reduction catalyst comprising the above-described catalyst metal and NOx storage material can be produced. The production method comprises adding sodium borohydride to a mixed solution containing platinum ions and gold ions in amounts such that the catalyst metal has a gold content of greater than 1 mol% but 20 mol% or less relative to the total molar number of platinum and gold contained in the catalyst metal, thereby reducing the platinum ions and the gold ions to produce a catalyst metal composed of a platinum-gold solid solution; purifying the catalyst metal obtained in the reducing step; and supporting the purified catalyst metal and an NOx storage material on a catalyst support.

First of all, it is generally very difficult to produce a platinum-gold solid solution, because this is generally a system where platinum and gold cannot form a solid solution in the range of the platinum content being about 15 mol% or more, as is clear from the binary phase diagram of Au-Pt system.

As a method for producing a catalyst comprising a catalyst support and a plurality of metal elements supported thereon, for example, a so-called impregnation method, in which respective metal elements are supported by simply impregnating a catalyst support with a mixed solution containing salts of these metal elements, followed by drying, firing, etc., is generally known. However, a catalyst metal having a particular combination of platinum and gold, in which these metal elements form a solid solution, cannot be formed by the conventional impregnation method. In addition, it is believed that platinum and gold are present separately as platinum particles and gold particles, respectively, on the catalyst support in the catalyst obtained by such a method. Therefore, a sufficient NOx storage ability and NOx purifying performance cannot be achieved in the NOx storage reduction catalyst in which platinum and gold are supported on a catalyst support by the conventional impregnation method.

As another method for producing a catalyst comprising a catalyst support and a plurality of metal elements supported thereon, a so-called coprecipitation method comprising adding a basic substance such as aqueous ammonia to a mixed solution having salts of respective metal elements dissolved therein, thereby causing coprecipitation, and heat-treating the obtained precipitate is generally known. However, similarly to the impregnation method, a catalyst metal comprising a solid solution of platinum and gold cannot be formed by such a coprecipitation method.

In addition, the reduction deposition method taught in JP 2001-104804 A is to stack another metal on metal particles. More specifically, the reduction deposition method merely means that another metal, e.g., Au is present as a phase on a partial surface of metal particles, e.g., Pt particles. Accordingly, of course, a catalyst metal comprising a solid solution of platinum and gold cannot be formed even by the reduction deposition method taught in JP 2001-104804 A.

Furthermore, as one method for producing particles comprising a plurality of metal elements, there is known a method comprising adding a reducing agent such as an alcohol to a mixed solution containing salts of respective metal elements constituting the particles, and simultaneously reducing ions of respective metal elements contained in the mixed solution under heating, etc., as necessary, followed by firing, etc. However, even if such a conventionally known method is applied to a particular combination of platinum and gold, it is not possible to produce a catalyst metal in which platinum and gold coexist at the nano-level. Moreover, even if a catalyst comprising platinum and gold is produced by such a method, the particular effect based on the combination of platinum and gold, i.e., the oxidation suppressing effect of platinum due to gold cannot be obtained, unless these components coexist at the nano-level.

The present inventors have found that unlike the conventional impregnation method and coprecipitation method as well as the above-described reduction deposition method and method using alcohol reduction, a catalyst metal composed of a platinum-gold solid solution can be produced by merely adding sodium borohydride in place of an alcohol as a reducing agent to a mixed solution containing platinum ions and gold ions in particular amounts, in particular, in amounts such that the catalyst metal has a gold content of greater than 1 mol% but 20 mol% or less, without the need for heating operation, etc. In addition, the present inventors have further found that supporting the produced catalyst metal composed of a platinum-gold solid solution and an NOx storage material on a catalyst support using a conventionally known method makes it possible to obtain an NOx storage reduction catalyst having a remarkably improved NOx storage ability in a lean atmosphere.

### [Reducing Step]

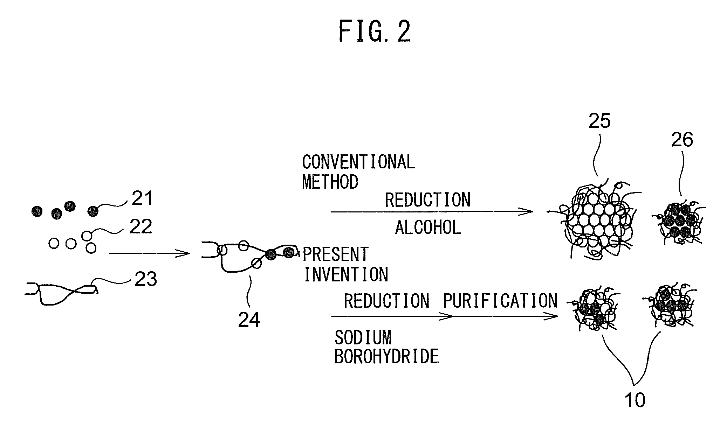

Fig. 2 is a diagram schematically showing a process for producing the catalyst metal in the present invention. In order to facilitate understanding, Fig. 2 also shows a conventional method using an alcohol-based reducing agent.

Referring to Fig. 2, for example, first, a platinum ion source and a gold ion source are dissolved in one or more solvents to prepare a mixed solution containing Pt²⁺ ions 21, Au³⁺ ions 22, and further optional protecting agent 23 such as polyvinylpyrrolidone (PVP) described below. Then, a complex 24 is formed by Pt²⁺ ions 21, Au³⁺ ions 22, and the optional protecting agent 23.

Then, in the conventional method, as shown in the upper side of Fig. 2, an alcohol such as ethanol is added as a reducing agent, and Pt²⁺ ions 21 and Au³⁺ ions 22 contained in the mixed solution are reduced under heating, etc., as necessary. However, when a relatively weak reducing agent such as alcohol is used, it is believed that Au³⁺ ions 22 that are easily reduced compared with Pt²⁺ ions 21 are preferentially reduced and undergo grain growth, resulting in separation of Pt and Au phases and formation of Au particles 25 and Pt particles 26, respectively.

In contrast, in the method of the present invention shown in the lower side of Fig. 2, sodium borohydride (NaBH₄) in place of an alcohol is added as a reducing agent to reduce Pt²⁺ ions 21 and Au³⁺ ions 22 contained in the mixed solution under stirring, etc., as necessary. Thereafter, sodium borohydride remaining in the mixed solution is removed by conducting a purification treatment described below. Without being bound by any particular theory, it is believed that since sodium borohydride has a very strong reducing power compared with an alcohol-based reducing agent, use of sodium borohydride as a reducing agent makes it possible to simultaneously reduce both Pt²⁺ ions 21 and Au³⁺ ions 22 dissolved in the mixed solution without preferentially reducing Au³⁺ ions 22 relative to Pt²⁺ ions 21, unlike the case of using an alcohol-based reducing agent. As a result, according to the method of the present invention, it is believed that it is possible to obtain a catalyst metal 10, in which Pt and Au are solid-solutioned at the nano-level.

### [Platinum Ion Source and Gold Ion Source]

The platinum ion source and gold ion source may include, but are not particularly limited to, for example, complexes containing these metals, or chlorides, nitrates, acetates, sulfates, etc., of these metals. In the method of the present invention, predetermined amounts of platinum ion source and gold ion source are dissolved in one or more solvents to prepare a mixed solution containing platinum ions and gold ions.

### [Solvent and Mixed Solution]

A solvent used in a mixed solution containing platinum ions and gold ions may include any solvent capable of dissolving a platinum ion source and a gold ion source to prepare a mixed solution containing platinum ions and gold ions, for example, an aqueous solvent such as water and an organic solvent such as alcohol, etc.

According to the method of the present invention, the mixed solution contains platinum ions and gold ions in the above solvent in amounts corresponding to the desired gold content in the catalyst metal. Specifically, the mixed solution may contain platinum ions and gold ions in amounts such that the catalyst metal has a gold content of greater than 1 mol% but 20 mol% or less, 3 mol% or more but 17 mol% or less, 4 mol% or more but 15 mol% or less, or 5 mol% or more but 10 mol% or less relative to the total molar number of platinum and gold contained in the catalyst metal.

### [Reducing Agent (Sodium Borohydride)]

According to the method of the present invention, as described above, sodium borohydride (NaBH₄) is added as a reducing agent to a mixed solution containing platinum ions and gold ions. The sodium borohydride may be added in an amount sufficient to reduce platinum ions and gold ions dissolved in the mixed solution to form a catalyst metal composed of a platinum-gold solid solution.

In the conventional method using an alcohol-based reducing agent, it is generally necessary to conduct a heating operation, etc., when respective metal ions contained in the mixed solution are reduced by the alcohol-based reducing agent. However, according to the method of the present invention, simply adding sodium borohydride to a mixed solution containing platinum ions and gold ions and mixing the mixed solution make it possible to simultaneously reduce platinum ions and gold ions contained in the mixed solution at room temperature without particularly requiring such heating operation to produce a catalyst metal comprising an at least partial solid solution, in particular a complete solid solution of platinum and gold at the nano-level.

For example, in the method of the present invention, another reducing agent having a strong reducing power compared with an alcohol-based reducing agent may also be used in place of sodium borohydride. Such a reducing agent may include, for example, a boron-based reducing agent akin to sodium borohydride, in particular, ammonia borane (NH₃BH₃) and hydrazine (N₂H₄), etc.

### [Protecting agent]

In the method of the present invention, a protecting agent may be optionally added to the mixed solution containing platinum ions and gold ions, in order to coordinate or adsorb the protecting agent to the surface of the catalyst metal produced in the reducing step of the method to suppress aggregation and particle growth of the catalyst metal and stabilize it. The protecting agent may include, but is not particularly limited to, preferably a coordinating substance and a substance having an ability of coordinating to both platinum and gold. The protecting agent that can be used in the method of the present invention includes, for example, a polymer compound such as hydrophilic polymer, and an amphipathic molecule.

The hydrophilic polymer includes a hydroxyl group-containing compound such as polyvinyl alcohol (PVA), a cyclic amide-containing compound such as polyvinylpyrrolidone (hereinafter, simply referred to as PVP), a cyclic imide-containing compound, a carboxyl group-containing compound such as polyacrylic acid (PAA), poly(sodium acrylate), poly(potassium acrylate), crosslinked polyacrylic acid partial hydrate and copolymer of acrylic acid and itaconic acid amides, a carboxylic acid ester compound such as saponified vinyl acetate-acrylic acid ester copolymer, an amide group-containing compound such as polyacrylamide, polyacrylamide partial hydrolysate and polyacrylamide partial hydrolysate, a nitrile group-containing compound such as acrylonitrile copolymer, a water-soluble or hydrophilic polymer such as polyvinylpyridine, polyethyleneimine (PEI), polyallylamine, polyamine, N-(3-aminopropyl)diethanolamine, polyamino acid, polyphosphoric acid and heteropolyacid, and copolymers thereof, a natural product such as cyclodextrin, aminopectin, methyl cellulose and gelatin, and the like. Among them, PVP is preferably used.

The amphipathic molecule may have a hydrophilic group and a lipophilic group, and includes an anionic surfactant, e.g., a higher fatty acid alkali salt such as sodium stearate, an alkyl sulfate such as sodium dodecylsulfate, an alkylsulfonate such as sodium dodecylsulfonate, and an alkylarylsulfonate such as sodium ethylbenzenesulfonate; a cationic surfactant, e.g., dodecyltrimethylammonium bromide, a higher amine halate of dodecyltrimethylammonium bromide, an alkylpyridinium halide such as methylpyridinium iodide, and a tetraammonium salt such as tetraalkylammonium iodide; a nonionic surfactant, e.g., a polyethylene glycol fatty acid ester such as polyethylene glycol alkyl ether and polyethylene glycol monolaurate, and a sorbitan fatty acid ester; and an amphoteric surfactant such as amino acid. In the method of the present invention, adding the protecting agent to the mixed solution containing platinum ions, gold ions, a solvent and sodium borohydride can make certain that the size of the obtained catalyst metal is controlled to a nanometer size.

### [Purifying Step]

In the solution containing the catalyst metal produced in the above reducing step, sodium borohydride as a reducing agent remains. This sodium borohydride may not be sufficiently decomposed and removed by a heat treatment in the subsequent supporting step. Therefore, after simultaneously reducing platinum ions and gold ions using sodium borohydride, the resulting solution is preferably subjected to a purification treatment with a large amount of acetone, etc. Since this permits the extraction of the remaining sodium borohydride into an acetone phase, the obtained catalyst metal can be easily purified. The solvent used in the purifying step may include any poor solvent having low solubility for the catalyst metal, in addition to acetone.

### [Supporting Step]

According to the method of the present invention, an NOx storage material and a catalyst metal composed of a platinum-gold solid solution produced in the above reducing step are supported on a catalyst support by a conventionally known method in the subsequent supporting step. The catalyst support introduced in the supporting step may include, but is not particularly limited to, any metal oxide generally used as a catalyst support in the technical field of an exhaust gas purification catalyst. Such a catalyst support may include, for example, alumina (Al₂O₃), silica (SiO₂), silica-alumina (SiO₂-Al₂O₃), ceria (CeO₂), zirconia (ZrO₂), ceria-zirconia (CeO₂-ZrO₂), titania (TiO₂), and combinations thereof, etc., as described above.

For example, in the supporting step, first, a solution containing the catalyst metal composed of a platinum-gold solid solution synthesized in the above reducing step is added to a powder of a metal oxide (catalyst support) dispersed in a predetermined amount of a solution so that the amount of platinum and/or gold (supported amount in terms of metal) generally ranges from 0.01 to 10 wt% based on the catalyst support. Then, the obtained solution may be dried and fired at a predetermined temperature for a predetermined time period, in particular, at a temperature and for a time period sufficient to decompose and remove impurities, the optional protecting agent, etc., and to support the catalyst metal on the catalyst support, whereby the catalyst metal can be supported on the catalyst support. In general, the drying may be performed under reduced pressure or ordinary pressure at a temperature of about 80°C to about 250°C for about 1 hour to about 24 hours, and the firing may be performed in an oxidizing atmosphere, for example, air, at a temperature of about 300°C to about 800°C for about 30 minutes to about 10 hours.

Next, an NOx storage material is further supported on the catalyst support which the catalyst metal is supported on. Specifically, first, the NOx storage material can be supported on the catalyst support by a known impregnation method, etc., using a solution containing a salt, e.g., acetate or nitrate of a metal constituting the NOx storage material at a predetermined concentration. Finally, the catalyst support, on which the catalyst metal and the NOx storage material are supported, is dried and fired at a predetermined temperature for a predetermined time period, whereby the NOx storage reduction catalyst of the present invention can be obtained. Although this is not particularly limited, for example, the above drying may be performed using a microwave, etc. Drying using a microwave makes it possible to evenly and uniformly support the NOx storage material on the catalyst support.

If desired, the NOx storage reduction catalyst of the present invention obtained as described above may be used, for example, by pressing the NOx storage reduction catalyst under high pressure to shape it into a pellet form, or by adding a predetermined binder, etc., to the NOx storage reduction catalyst to form a slurry and coating a catalyst substrate such as a cordierite-made honeycomb substrate with the slurry. In the latter case, for example, after a powder of the catalyst support having the catalyst metal supported thereon is wash-coated on the above catalyst substrate, the NOx storage material may be supported on the obtained catalyst layer by impregnation.

The present invention is described in more detail below based on Examples, but the present invention is not limited thereto.

### EXAMPLES

### [Example 1 (Reference Example)]

### [Synthesis of Pt-Au catalyst metal having an Au content of 1 mol%]

First, 3.448 g of polyvinylpyrrolidone (PVP K-25) as a protecting agent was introduced into a 1-L separable flask containing a stirring bar having appropriate size, and the polyvinylpyrrolidone was dissolved with stirring by adding 300 mL of distilled water (Solution 1). Next, 1.818 g of a chloroplatinic acid chemical solution (H₂PtCl₄, concentration: 33.02 wt%) as a platinum ion source and 0.0204 g of a chloroauric acid chemical solution (HAuCl₄, concentration: 29.988 wt%) as a gold ion source were put in a 200-mL beaker and mixed (Solution 2). After adding Solution 2 to Solution 1, the mixed solution was prewashed with 50 mL of distilled water. The resulting mixed solution was stirred at room temperature with bubbling nitrogen so as to expel oxygen from the mixed solution and create the conditions under which platinum and gold can be easily reduced. Then, 0.470 g of sodium borohydride (NaBH₄) as a reducing agent was diluted with 50 mL of distilled water and added to the mixed solution in the separable flask. After the addition, the color of the mixed solution immediately turned to black, and the mixed solution was then further stirred for about 30 minutes.

Next, about 4 L of acetone was put in a 5-L beaker, and the solution obtained above was charged thereinto at once. Then, the resulting mixed solution was treated in a centrifugal separator (3,000 rpm) for 5 minutes to extract a metal particle component (precipitate). Then, the supernatant solution was discarded to remove the remaining sodium borohydride, etc. Finally, about 300 mL of ethanol was added to the obtained precipitate to obtain a solution containing a Pt-Au catalyst metal having an Au content of 1 mol%.

### [Preparation of Pt-Au, Ba/CeO₂-ZrO₂ (Au content: 1 mol%)]

Next, the solution containing a Pt-Au catalyst metal (Au content: 1 mol%) obtained above was introduced into a ceria-zirconia (CeO₂-ZrO₂) support in an amount such that the amount of Pt supported is 1 wt% relative to the ceria-zirconia support, and was evaporated to dryness. The resulting support was dried in a drying furnace for 12 hours, then put in a mortar and ground with a pestle, and the obtained powder was fired in air at 500°C for 2 hours in a firing furnace.

Next, the sample was taken out of the firing furnace, put in a mortar and ground with a pestle, and the obtained powder was charged into a 1,000-mL beaker containing a stirring bar. Subsequently, 6.14 g of barium acetate ((CH₃COO)₂Ba) was charged into another 100-mL beaker containing a stirring bar, and ion-exchanged water was gradually added until barium acetate was completely dissolved. After stirring for about 5 minutes, the resulting solution was added to the above 1,000-mL beaker and stirred. The mixture was stirred for a while and then dried at room temperature using a microwave (1.5 kW × 30 minutes). After the completion of drying, the obtained powder was put in a crucible, the crucible was set in a firing furnace, and firing was performed at 500°C for 30 minutes to obtain an NOx storage reduction catalyst of Pt-Au,Ba/CeO₂-ZrO₂ (Au content: 1 mol%, Pt supported amount: 1 wt%, and Ba supported amount: 11 wt%).

### [Example 2]

### [Preparation of Pt-Au, Ba/CeO₂-ZrO₂ (Au content: 5 mol%)]

An NOx storage reduction catalyst of Pt-Au,Ba/CeO₂-ZrO₂ (Au content: 5 mol%, Pt supported amount: 1 wt%, and Ba supported amount: 11 wt%) was obtained in the same manner as in Example 1, except that while the addition amounts of chloroplatinic acid chemical solution and barium acetate were not changed, the chloroauric acid chemical solution was added in an amount giving a gold content of 5 mol% and the amounts of polyvinylpyrrolidone and sodium borohydride were appropriately changed in response to this change.

### [Example 3]

### [Preparation of Pt-Au, Ba/CeO₂-ZrO₂ (Au content: 10 mol%)]

An NOx storage reduction catalyst of Pt-Au,Ba/CeO₂-ZrO₂ (Au content: 10 mol%, Pt supported amount: 1 wt%, and Ba supported amount: 11 wt%) was obtained in the same manner as in Example 1, except that while the addition amounts of chloroplatinic acid chemical solution and barium acetate were not changed, the chloroauric acid chemical solution was added in an amount giving a gold content of 10 mol% and the amounts of polyvinylpyrrolidone and sodium borohydride were appropriately changed in response to this change.

### [Example 4]

### [Preparation of Pt-Au, Ba/CeO₂-ZrO₂ (Au content: 20 mol%)]

An NOx storage reduction catalyst of Pt-Au,Ba/CeO₂-ZrO₂ (Au content: 20 mol%, Pt supported amount: 1 wt%, and Ba supported amount: 11 wt%) was obtained in the same manner as in Example 1, except that while the addition amounts of chloroplatinic acid chemical solution and barium acetate were not changed, the chloroauric acid chemical solution was added in an amount giving a gold content of 20 mol% and the amounts of polyvinylpyrrolidone and sodium borohydride were appropriately changed in response to this change.

### [Example 5 (Reference Example]

### [Preparation of Pt-Au, Ba/CeO₂-ZrO₂ (Au content: 30 mol%)]

An NOx storage reduction catalyst of Pt-Au,Ba/CeO₂-ZrO₂ (Au content: 30 mol%, Pt supported amount: 1 wt%, and Ba supported amount: 11 wt%) was obtained in the same manner as in Example 1, except that while the addition amounts of chloroplatinic acid chemical solution and barium acetate were not changed, the chloroauric acid chemical solution was added in an amount giving a gold content of 30 mol% and the amounts of polyvinylpyrrolidone and sodium borohydride were appropriately changed in response to this change.

### [Example 6 (Reference Example)]

### [Preparation of Pt,Ba/CeO₂-ZrO₂ (Au content: 0 mol%)]

An NOx storage reduction catalyst of Pt,Ba/CeO₂-ZrO₂ (Au content: 0 mol%, Pt supported amount: 1 wt%, and Ba supported amount: 11 wt%) was obtained in the same manner as in Example 1, except that the chloroauric acid chemical solution was not added and the amounts of polyvinylpyrrolidone and sodium borohydride were appropriately changed in response to this change.

### [Comparative Example 1]

### [Preparation of Pt-Au, Ba/CeO₂-ZrO₂ (Au content: 1 mol%) utilizing reduction deposition method]

Pt-Au, Ba/CeO₂-ZrO₂ (Au content: 1 mol%) was prepared by utilizing the reduction deposition method disclosed in JP 2001-104804 A. Specifically, first, a CeO₂-ZrO₂ powder was added to an aqueous solution in which Pt(NO₂)₂(NH₃)₂ was dissolved at 9.98 × 10⁻² wt%, and the obtained solution was stirred for 3 hours, followed by drying at 120°C for 24 hours in the atmosphere. After the drying, a heat treatment was performed at 300°C for 2 hours in the atmosphere to obtain a 1 wt% Pt-supported powder. A predetermined amount of HAuCl₄·4H₂O, and Na₂S₂O₃·5H₂O (9.40×10⁻² wt%), Na₂S₂O₃ (2.41×10⁻¹ wt%) and C₆H₇NaO₆ (9.45×10⁻¹ wt%) as reducing agents were added to ion-exchanged water at 60°C in which the above powder was dispersed, and Au was reduced and deposited under stirring for 24 hours. After the reduction deposition, the powder was filtered and washed with ion-exchanged water at 60°C. The washed powder was subject to drying at 120°C for 2 hours in the atmosphere. After the drying, a heat treatment was performed at 500°C for 2 hours in the atmosphere.

Next, the sample after firing was put in a mortar and ground with a pestle, and the obtained powder was charged into a 1,000-mL beaker containing a stirring bar. Subsequently, a predetermined amount of barium acetate ((CH₃COO)₂Ba) was charged into another 100-mL beaker containing a stirring bar, and ion-exchanged water was gradually added until barium acetate was completely dissolved. After stirring for about 5 minutes, the resulting solution was added to the above 1,000-mL beaker and stirred. The mixture was stirred for a while and then dried at room temperature by using a microwave (1.5 kW × 30 minutes). After the completion of drying, the obtained powder was put in a crucible, the crucible was set in a firing furnace, and firing was performed at 500°C for 30 minutes to obtain an NOx storage reduction catalyst of Pt-Au, Ba/CeO₂-ZrO₂ (Au content: 1 mol%, Pt supported amount: 1 wt%, and Ba supported amount: 11 wt%).

### [Comparative Examples 2 to 5]

### [Preparation of Pt-Au, Ba/CeO₂-ZrO₂ (Au content: 5, 10, 20 and 30 mol%) utilizing reduction deposition method]

NOx storage reduction catalysts of Pt-Au,Ba/CeO₂-ZrO₂ (Pt supported amount: 1 wt%, Ba supported amount: 11 wt%) of Comparative Examples 2 to 5 where the Au content was 5, 10, 20 and 30 mol%, respectively, were obtained in the same manner as in Comparative Example 1, except that the amount of HAuCl₄·4H₂O was changed.

### [Comparative Example 6]

### [Preparation of Pt,Ba/CeO₂-ZrO₂ (Au content: 0 mol%)]

An NOx storage reduction catalyst of Pt,Ba/CeO₂-ZrO₂ (Au content: 0 mol%, Pt supported amount: 1 wt%, and Ba supported amount: 11 wt%) was obtained by not performing reduction and deposition of Au in Comparative Example 1 but merely supporting Ba on the 1 wt% Pt-supported powder.

### [Analysis of Catalyst by STEM-EDX]

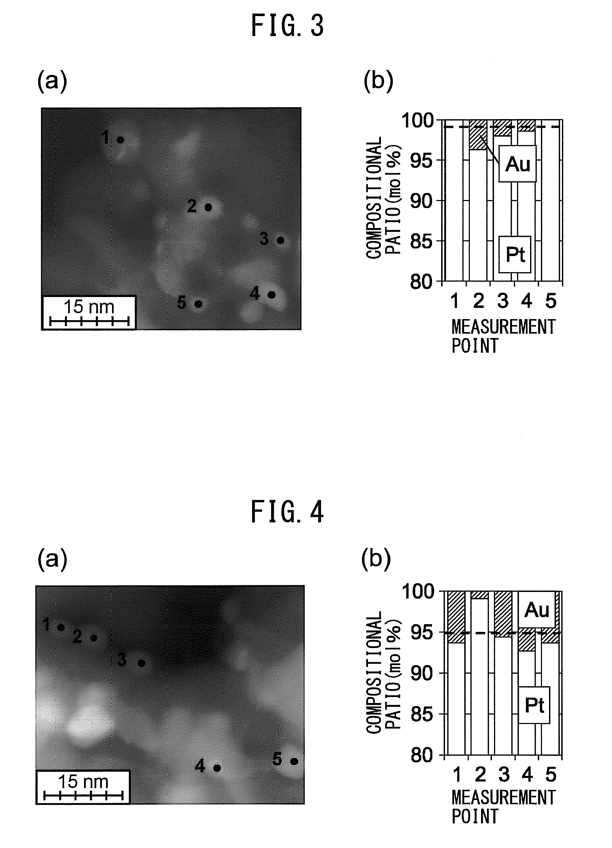

The NOx storage reduction catalysts of Examples 1 to 3 and 6 were measured by a scanning transmission electron microscope equipped with an energy dispersive X-ray analyzer (STEM-EDX) (HD-2000 manufactured by Hitachi, accelerating voltage: 200 kV). Figs. 3 to 6 show the results. Fig. 3 to 6 show the analysis results of NOx storage reduction catalysts of Examples 1 to 3 and 6 by STEM-EDX, respectively. More specifically, Figs. 3(a) to 6(a) show photographs of the NOx storage reduction catalysts of Examples 1 to 3 and 6 by STEM-EDX, and Figs. 3(b) to 6(b) show the compositional ratio (mol%) of Pt and Au at measurement points 1 to 5 (analyzed under condition in which the spot size of an electron beam is 1 nm or less) in Figs. 3(a) to 6(a).

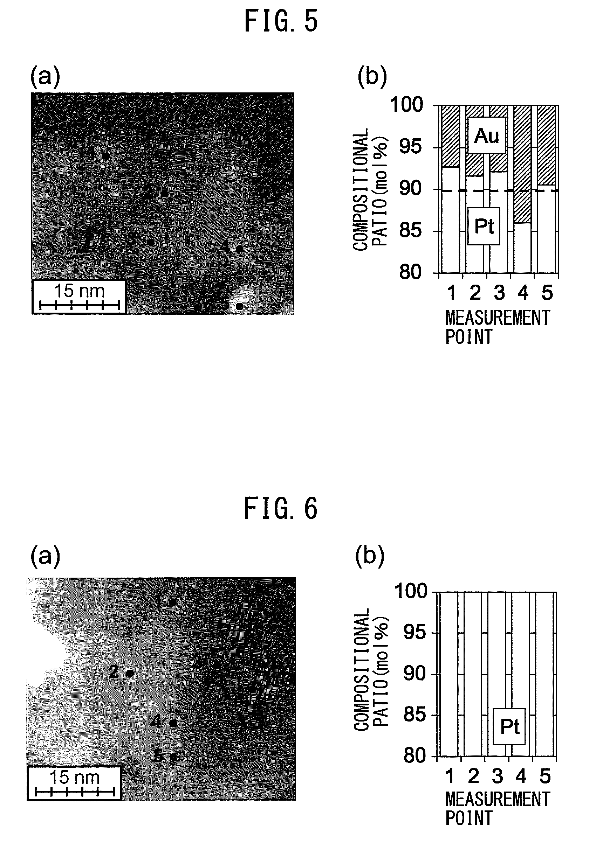

Referring to Figs. 3 to 6, it can be confirmed that in all of the NOx storage reduction catalysts of Examples 1 to 3 and 6, many primary particles having a particle diameter of about 10 nm or less, in particular, about 5 nm or less were formed. The average diameter of primary particles at measurement points 1 to 5 in Figs. 3(a) to 6(a) were 3.07 nm (Fig. 3), 3.09 nm (Fig. 4), 3.77 nm (Fig. 5), and 3.56 nm (Fig. 6), respectively.

Next, explaining the composition analysis by EDX, in the NOx storage reduction catalyst of Example 6 where a catalyst metal composed of only Pt without containing Au is supported on the catalyst support, the Pt content was of course 100 mol% at all measurement points in Fig. 6(a) (see Fig. 6(b)). On the other hand, in the NOx storage reduction catalyst of Example 1 having an Au content of 1 mol%, despite a very small Au content, both Pt and Au elements were detected at three measurement points corresponding to a majority of measurement points 1 to 5 in Fig. 3(a).

Furthermore, in the NOx storage reduction catalysts of Examples 2 and 3 having an Au content of 5 mol% and 10 mol%, respectively, as is clear from the results in Figs. 4(b) and 5(b), both Pt and Au elements were detected at all of the measurement points 1 to 5 in Fig. 4(a) and Fig. 5(a), i.e., it was confirmed that both Pt and Au elements coexist in the same particle. These results support the fact that platinum and gold form a uniform solid solution at the atomic level in the NOx storage reduction catalyst of the present invention. In addition, referring to Figs. 3(b) to 5(b), in the NOx storage reduction catalysts of Examples 1 to 3, the compositional ratio of Pt and Au was slightly varied, but the Au content at each measurement point was very consistent with the charging Au content.

### [Evaluation of NOx Storage Ability]

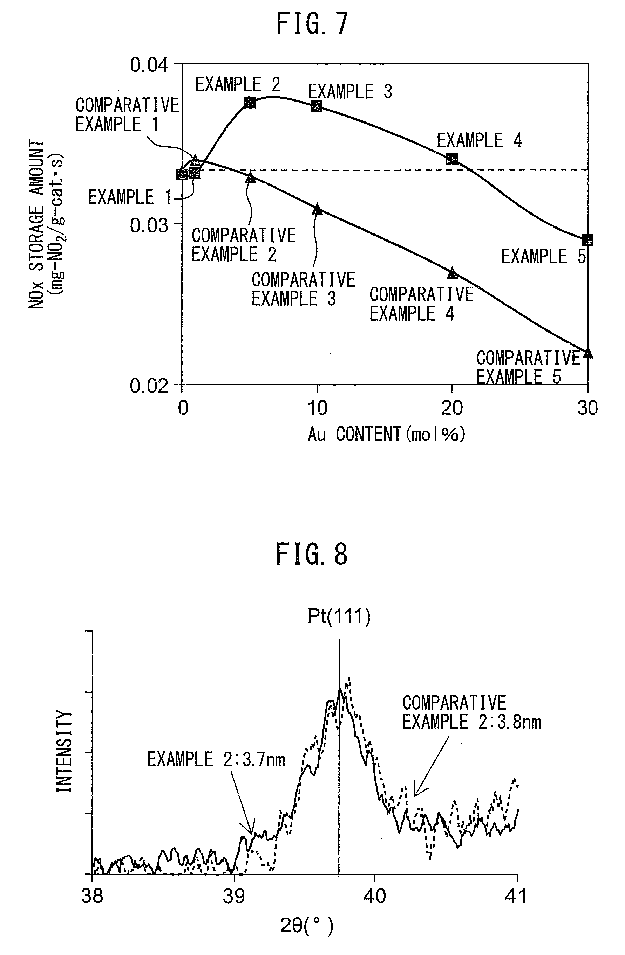

Next, the NOx storage reduction catalysts of Examples 1 to 6 and Comparative Examples 1 to 6 were evaluated for the NOx storage ability. Each NOx storage reduction catalyst was compression-molded under a pressure of 1 ton by a cold hydrostatic isostatic press (CIP), and the molded catalyst was then pulverized and sieved to obtain a pellet catalyst. Then, 3 g of the pellet catalyst was put in a flow reaction furnace, heated to 500°C at a temperature rise rate of 30°C/min under nitrogen stream, and kept at this temperature for 5 minutes in a hydrogen 1% gas (balance nitrogen), and the temperature was then lowered to 300°C under nitrogen stream. Thereafter, using model gases for evaluation shown in following Table 1, a lean model gas (60 seconds) and a rich model gas (8 seconds) were flowed to a catalyst bed at a flow rate of 20 L/min while alternately switching these gases, this operation was repeated 5 cycles, and the average value of NOx storage amounts of second to fourth cycles was calculated. Fig. 7 shows the results.

**Table 1: Composition of Model Gas for Evaluation**

| Gas Composition | NO (%) | O₂ (%) | CO₂ (%) | H₂ (%) | C₃H₆ (%) | CO (%) | H₂O (%) | N₂ |
|---|---|---|---|---|---|---|---|---|
| Lean model gas | 0.040 | 7.0 | 10 | - | - | - | 4.0 | balance |
| Rich model gas | - | - | 10 | 1.0 | 0.10 | 6.0 | 4.0 | balance |

Fig. 7 shows the NOx storage ability regarding the NOx storage reduction catalysts of Examples 1 to 6 and Comparative Examples 1 to 6. Fig. 7 shows the Au content (mol%) on the abscissa, and shows the NOx storage amount (mg-NO₂/g-cat·s) on the ordinate.

Referring to Fig. 7, it is understood that both catalysts of Example 6 and Comparative Example 6 where a catalyst metal composed of only Pt without containing Au is supported on a catalyst support exhibited almost the same NOx storage ability (the dotted line in the figure). In the NOx storage reduction catalysts of Comparative Examples 1 to 5 prepared by utilizing the reduction deposition method disclosed in JP 2001-104804 A, when the Au content was 1 mol%, the NOx storage ability was slightly increased. However, there was observed a tendency that as the Au content increases, the NOx storage ability decreases.

On the other hand, in the NOx storage reduction catalysts of Examples 1 to 5 prepared according to the method of the present invention, an NOx storage ability equal to that of the Au-free NOx storage reduction catalyst of Example 6 was exhibited when the Au content was 1 mol%. However, when the Ag content was increased, the NOx storage ability was greatly enhanced, and an NOx storage ability higher than that of the NOx storage reduction capacity of Example 6 could be achieved with an Au content of greater than 1 mol% but 20 mol% or less.

### [Analysis of Catalyst by X-Ray Diffraction (XRD)]

Next, the NOx storage reduction catalysts of Example 2 and Comparative Example 2 having an Au content of 5 mol% were analyzed by X-ray diffraction (XRD) (X-ray source: CuKα). Fig. 8 shows the results. Fig. 8 also shows the crystallite size of the Pt-Au catalyst metal regarding each catalyst. These values were calculated by the Scherrer equation from the diffraction peak around 2θ = 39.8° regarding each catalyst. Referring to Fig. 8, in the NOx storage reduction catalyst of Example 2 prepared according to the method of the present invention, the crystallite size of the Pt-Au catalyst metal was 3.7 nm, whereas in the NOx storage reduction catalyst of Comparative Example 2 prepared by utilizing the reduction deposition method disclosed in JP 2001-104804 A, the crystallite size of the Pt-Au catalyst metal was 3.8 nm, revealing that the crystallite size shows almost the same value.

### [Analysis of Catalyst by CO Pulse Adsorption Method]

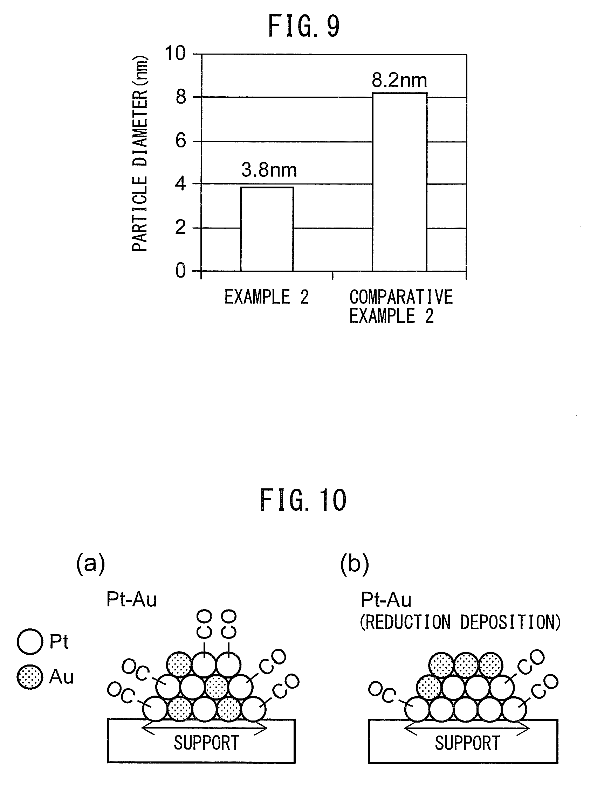

Next, the NOx storage reduction catalysts of Example 2 and Comparative Example 2 having an Au content of 5 mol% were measured for the CO adsorption amount by a CO pulse adsorption method, and the particle diameter of the Pt-Au catalyst metal was calculated based on the measured value. Fig. 9 shows the results. Referring to Fig. 9, in the NOx storage reduction catalyst of Example 2, the particle diameter of the Pt-Au catalyst metal was 3.8 nm and showed almost the same value as the crystallite size of the Pt-Au catalyst metal in Fig. 8. On the other hand, in the NOx storage reduction catalyst of Comparative Example 2, the particle diameter of the Pt-Au catalyst metal was 8.2 nm and showed a very large value compared with the crystallite size of the Pt-Au catalyst metal in Fig. 8.

Without being bound by any particular theory, it is believed that the results in Figs. 8 and 9 are attributed to the structure of the Pt-Au catalyst metal in the NOx storage reduction catalysts of Example 2 and Comparative Example 2. Fig. 10 is a conceptual view for explaining CO adsorption in the NOx storage reduction catalysts prepared according to (a) the method of the present invention and (b) the conventional reduction deposition method.

Explaining Fig. 10(a), in the NOx storage reduction catalyst prepared according to the method of the present invention, it is believed that since Pt and Au form a uniform solid solution, the amount of Au present on the surface of the catalyst metal is small. In other words, it is believed that Au enters the crystal framework of Pt to suppress oxidation of Pt and at the same time, Au is kept from depositing on the surface and covering Pt active sites. For this reason, as shown in Fig. 10(a), in the measurement by a CO pulse adsorption method, CO adsorption to Pt is considered to be relatively less inhibited or absolutely not inhibited by Au, affording almost the same measurement result as the value of crystallite size by XRD.

On the other hand, explaining Fig. 10(b), in the NOx storage reduction catalyst prepared by a conventional reduction deposition method, it is believed that since Pt and Au do not form a solid solution and Au is stacked on Pt particles, a large amount of Au are present on surface of the catalyst metal. In this case, it is believed that since Pt active sites are covered with Au, in the measurement by a CO pulse adsorption method, Co adsorption to Pt are inhibited by Au as shown in Fig. 10(b). As a result, it is believed that the particle diameter calculated by the CO pulse adsorption method was larger than the actual particle diameter.

### DESCRIPTION OF REFERENCE NUMERALS

- 10:: Catalyst metal
- 11:: NOx storage material
- 12:: Catalyst support
- 13:: Pt
- 14:: Au

## Claims

1. An NOx storage reduction catalyst comprising a catalyst support, and a catalyst metal and an NOx storage material supported thereon, wherein said catalyst metal is composed of a platinum-gold solid solution, and has a gold content of greater than 1 mol% but 20 mol% or less relative to the total molar number of platinum and gold contained in said catalyst metal.

2. The NOx storage reduction catalyst as claimed in claim 1, wherein said catalyst metal has a gold content of 5 mol% or more but 10 mol% or less relative to the total molar number of platinum and gold contained in said catalyst metal.

3. The NOx storage reduction catalyst as claimed in claim 1 or 2, wherein said catalyst metal has an average primary particle diameter of greater than 0 nm but 10 nm or less.

4. The NOx storage reduction catalyst as claimed in claim 3, wherein said catalyst metal has an average primary particle diameter of greater than 0 nm but 5 nm or less.

5. The NOx storage reduction catalyst as claimed in any one of claims 1 to 4, wherein when said catalyst metal is analyzed using a scanning transmission electron microscope equipped with an energy dispersive X-ray analyzer (STEM-EDX) under condition in which the spot size of an electron beam is 1 nm or less, both platinum and gold elements are detected at a majority of randomly selected 5 or more measurement points.

6. The NOx storage reduction catalyst as claimed in claim 5, wherein both platinum and gold elements are detected at 80% or more of randomly selected 5 or more measurement points.

7. The NOx storage reduction catalyst as claimed in any one of claims 1 to 6, wherein said catalyst support is selected from the group consisting of alumina, silica, silica-alumina, ceria, zirconia, ceria-zirconia, titania, and combinations thereof.

8. The NOx storage reduction catalyst as claimed in claim 7, wherein said catalyst support is ceria or ceria-zirconia.

9. A method for producing an NOx storage reduction catalyst comprising a catalyst support, and a catalyst metal and an NOx storage material supported thereon wherein said catalyst metal is composed of a platinum-gold solid solution, the method comprising:
adding sodium borohydride to a mixed solution containing platinum ions and gold ions in amounts such that said catalyst metal has a gold content of greater than 1 mol% but 20 mol% or less relative to the total molar number of platinum and gold contained in said catalyst metal, thereby reducing the platinum ions and the gold ions to produce a catalyst metal composed of a platinum-gold solid solution,
purifying the catalyst metal obtained in said reducing step, and
supporting the purified catalyst metal and an NOx storage material on a catalyst support.

10. The method as claimed in claim 9, wherein said reducing step is performed without heating operation.

11. The method as claimed in claim 9 or 10, wherein said purifying step comprises extracting said catalyst metal with acetone.

12. The method as claimed in any one of claims 9 to 11, wherein said mixed solution further contains a protecting agent.
